# EUROPEAN PATENT APPLICATION

(11) **EP 4 597 017 A1**
(43) Date of publication of application: **06.08.2025**
(21) Application number: 23872444.7
(22) Date of filing: 27.09.2023
(51) Int. Cl.: F28D 21/00, F28F 9/22, B33Y 80/00, F28D 7/08

(54) **HEAT EXCHANGER**

(30) Priority: 30.09.2022 JP 2022157763
(71) Applicant: Sumitomo Precision Products Co., Ltd., Hyogo 660-0891 (JP)
(72) Inventor: NISHIBE, Kosuke, Amagasaki-shi, Hyogo 660-0891 (JP)
(74) Representative: Viering, Jentschura & Partner mbB Patent- und Rechtsanwälte
(86) International application number: PCT/JP2023/035204
(87) International publication number: WO 2024/071222

(57) **Abstract**

A heat exchanger includes a core capable of exchanging heat between a plurality of fluids. The core includes a core outer peripheral wall forming an outer surface and one unit structure or a plurality of unit structures arranged inside the outer peripheral wall. The unit structure includes a plurality of flow paths formed to extend in a predetermined direction as a whole, and a partition wall separating the plurality of flow paths from each other. The plurality of flow paths include a first flow path(s) in which a first fluid flows, and a second flow path(s) in which a second fluid flows to exchange heat to/from the first fluid through the partition wall. The partition wall includes a division wall part(s). The division wall part(s) has/have a twisted shape that rotates about a rotation center axis extending in the predetermined direction in accordance with a position in the predetermined direction, and is/are formed to extend in a spiral shape from the rotation center axis in a cross section perpendicular to the predetermined direction.

## Description

### Technical Field

The present invention relates to a heat exchanger, in particular to a heat exchanger exchanging heat between fluids flowing in flow paths.

Heat exchangers exchanging heat between fluids flowing in flow paths are known in the art.

Basic structures, such as a plate-fin structure and a shell-and-tube structure, of heat exchangers are generally known. Also, as one of structural examples, a heat exchanger is proposed which includes a plurality of tubular flow paths partitioned by partition walls having a cross shape, the partition walls being formed in helical shapes, and the plurality of flow paths extending in a predetermined direction as a whole. The aforementioned structure example is suitable for production using additive manufacturing.

### Prior Art

### Patent Document

Patent Document 1: Japanese Patent Laid-Open Publication No. JP 2020-46161

### Summary of the Invention

### Problems to be Solved by the Invention

Although additive manufacturing provides a high degree of flexibility in producible shape, it is known that, when forming an inclined surface that forms an angle of approximately not greater than 45 degrees with respect to a horizontal plane (or when forming a horizontal surface) in production, shape failures are likely to occur in the action of gravity.

The present invention is intended to solve the above problem, and one object of the present invention is to provide a heat exchanger capable of being produced by additive manufacturing and further improving heat exchange efficiency.

### Means for Solving the Problems

In order to attain the aforementioned object, a heat exchanger according to the present invention includes a core capable exchanging heat between a plurality of fluids. The core includes a core outer peripheral wall forming an outer surface, and one unit structure or a plurality of unit structures arranged inside the outer peripheral wall. The unit structure includes a plurality of flow paths formed to extend in a predetermined direction as a whole, and a partition wall separating the plurality of flow paths from each other. The plurality of flow paths include a first flow path(s) in which a first fluid flows, and a second flow path(s) in which a second fluid flows to exchange heat to/from the first fluid through the partition wall. The partition wall includes a division wall part(s). The division wall part(s) has/have a twisted shape that rotates about a rotation center axis extending in the predetermined direction in accordance with a position in the predetermined direction, and is/are formed to extend in a spiral shape(s) from the rotation center axis in a cross section perpendicular to the predetermined direction.

Here, the term "to extend in a predetermined direction as a whole" refers to that all of the plurality of flow paths extend from inlets of the flow paths toward outlets positioned away from the inlets in the predetermined direction but can be curved in a direction different from the predetermined direction on courses from the inlets to the outlets. The term "a helical shape" refers to a shape that is twisted to rotate about its rotation center axis in accordance with its movement in a predetermined direction in which the rotation center axis extends. The term "a spiral shape" refers to a shape that has a distance increasing from its rotation center axis in accordance with its rotation angle about the rotation center axis. The term "a certain shape" refers to a broad sense that includes not only a strictly geometrically defined shape but also a shape having allowable difference from such a geometrical definition.

### Effect of the Invention

According to the present invention, it is possible to provide a heat exchanger capable of being produced by additive manufacturing and further improving heat exchange efficiency.

### Brief Description of the Drawings

FIG. 1 is a schematic view showing a heat exchanger according to a first embodiment.
FIG. 2 is a schematic cross-sectional view showing the heat exchanger according to the first embodiment.
FIG. 3 is a schematic perspective view showing an exemplary core of the heat exchanger according to the first embodiment.
FIG. 4 is an enlarged view of one of unit structures of the exemplary core according to the first embodiment as viewed in a predetermined direction.
FIG. 5 is a view of the unit structure according to the first embodiment illustrating cross sections of the unit structure at a plurality of positions in a Z direction.
FIG. 6 is a partially enlarged view of a cross section of the unit structure according to the first embodiment taken along a line passing through a rotation center axis of the unit structure extending in the Z direction.
FIG. 7 is a schematic view showing a three-dimensional shape of division wall parts in the unit structure according to the first embodiment.
FIG. 8 is a schematic view showing positional relation between flow paths in the cross sections depending on positions in the Z direction of the unit structure according to the first embodiment.
FIG. 9 is an exploded perspective view showing a structure of a distributor according to the first embodiment.
FIG. 10 is another exploded view perspective showing the structure of the distributor according to the first embodiment.
FIG. 11 is a schematic view showing a structure of a unit structure of a core of a comparative example.
FIG. 12(A) is a cross-sectional view of the core of the comparative example having a large pitch taken along a line extending in the Z direction, and FIG. 12(B) is a cross-sectional view of the core of the comparative example having a small pitch taken along the line extending in the Z direction.
FIG. 13(A) is a cross-sectional view of the unit structure according to the first embodiment taken along a line extending in the Z direction, and FIG. 13(B) is a cross-sectional view of a unit structure of the comparative example taken along the line extending in the Z direction.
FIG. 14 is a schematic perspective view showing a structure of a core according to a second embodiment.
FIG. 15 is an enlarged view showing a structure of a Z-directional end surface of the core according to the second embodiment.
FIG. 16 is a view schematically showing cross sections of the core according to the second embodiment at Z-directional positions.
FIG. 17 is a perspective view showing a cross section of the core according to the second embodiment taken along a line extending in the Z direction.
FIG. 18 is a cross-sectional view showing a core according to a third modified embodiment taken along a line extending perpendicular to the Z direction.
FIG. 19 is a cross-sectional view showing a core according to a fourth modified embodiment taken along a line extending perpendicular to the Z direction.
FIG. 20 is a cross-sectional view showing a core according to a fifth modified embodiment taken along a line extending perpendicular to the Z direction.

### Modes for Carrying Out the Invention

The following description will describe embodiments according to the present invention with reference to the drawings.

### [First Embodiment]

### (Entire Configuration of Heat Exchanger)

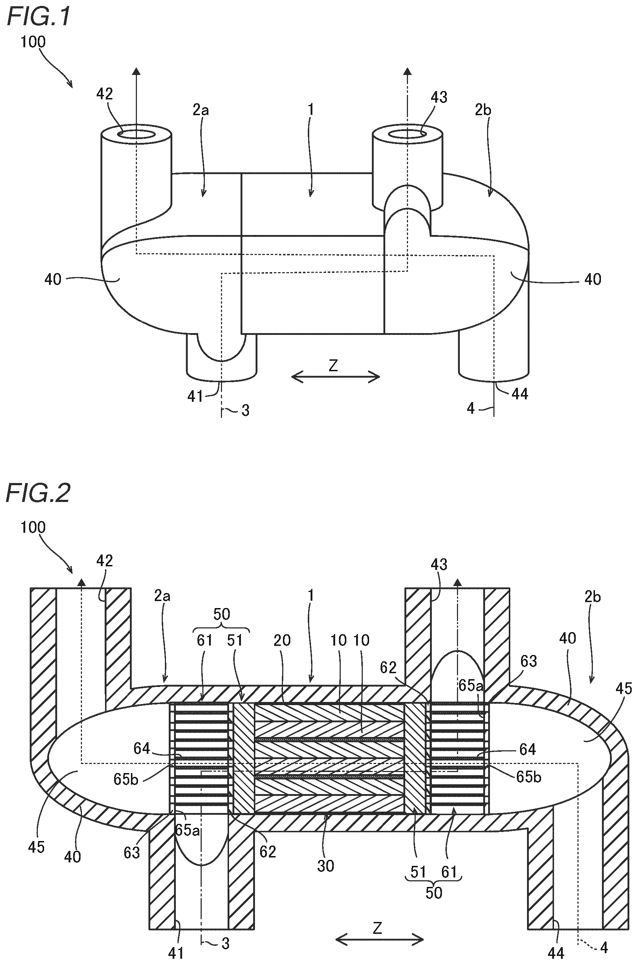

A heat exchanger 100 according to a first embodiment is now described with reference to FIGS. 1 to 2.

FIG. 1 is a schematic view showing the heat exchanger according to the first embodiment. As shown in FIG. 1, the heat exchanger 100 includes a core 1 and headers 2a and 2b.

The core 1 has a tubular shape having a rectangular cross section with both ends being opened, and is configured to allow fluids to flow between one end and another end. At least a first fluid 3 and a second fluid 4 separately flow through separate flow paths of the core 1 so that heat can be exchanged between the first fluid 3 and the second fluid 4.

The headers 2a and 2b are connected to one end or another end of the core 1. The headers 2a and 2b are configured to be able to introduce the fluids into the core 1 or to draw out the fluids from the core 1. Each of the headers 2a and 2b has two openings for introducing or drawing out the fluid. In the heat exchanger shown in FIG. 1, one header 2a has an inlet 41 for introducing the first fluid and an outlet 42 for drawing out the second fluid. Another header 2b has an outlet 43 for drawing out the first fluid and an inlet 44 for introducing the second fluid.

FIG. 2 is a schematic cross-sectional view showing the heat exchanger according to the first embodiment. As shown in FIG. 2, the headers 2a and 2b include covers 40 and distributors 50.

The covers 40 have a dome shape. The covers 40 are formed to cover one end or another end of the core 1. The aforementioned inlet 41 for the first fluid and the aforementioned outlet 42 for the second fluid are formed in the cover 40 of the one header 2a. The aforementioned outlet 43 for the first fluid and the aforementioned inlet 44 for the second fluid are formed in the cover 40 of the another header 2b.

The distributors 50 are arranged inside the covers 40 and include divided separate routes through which the first fluid 3 and the second fluid 4 separately flow. The distributors 50 connect the inlet 41 for the first fluid to the outlet 43 for the first fluid. Also, the distributors 50 connect the inlet 44 for the second fluid to the outlet 42 for the second fluid.

The first fluid 3 that flows through the inlet 41 for the first fluid is supplied by the one header 2a to the core 1 (the first flow path 11 of the core) through the distributor 50. Also, the first fluid 3 that flows out of the core 1 (the first flow path 11 of the core) is conveyed by the another header 2b through the distributor 50 to the outlet 43 for the first fluid. The first flow path 11 will be described later.

Also, the second fluid 4 that flows through the inlet 44 for the second fluid is supplied by the another header 2b through the distributor 50 to the core 1 (the second flow path 12 of the core). Also, the second fluid 4 that flows out of the core 1 (the second flow path 12 of the core) is conveyed to the outlet 42 for the second fluid through the distributor 50 by the one header 2a. The second flow path 12 will be described later.

Accordingly, the heat exchanger 100 according to the first embodiment is configured as a counter-flow heat exchanger in which the first fluid 3 flows from one end of the core 1 to another end and the second fluid 4 flows from the another end of the core 1 to the one end to exchange heat between the fluids. A counter-flow heat exchanger refers to a heat exchanger in which fluids for exchanging heat between the fluids flow in opposite directions.

In heat exchange relation of the heat exchanger 100 according to the first embodiment, heat is exchanged between an inlet side of the first fluid 3 and an outlet side of the second fluid 4, and between an outlet side of the first fluid 3 and an inlet side of the second fluid 4 so that an outlet temperature of the first fluid 3 can be brought closer to an inlet temperature of the second fluid 4, and an outlet temperature of the second fluid 4 can be brought closer to an inlet temperature of the first fluid 3. For this reason, since temperature difference between the inlet temperature and the outlet temperature of each fluid can be large, high heat exchange efficiency can be obtained.

### (Structure of Core)

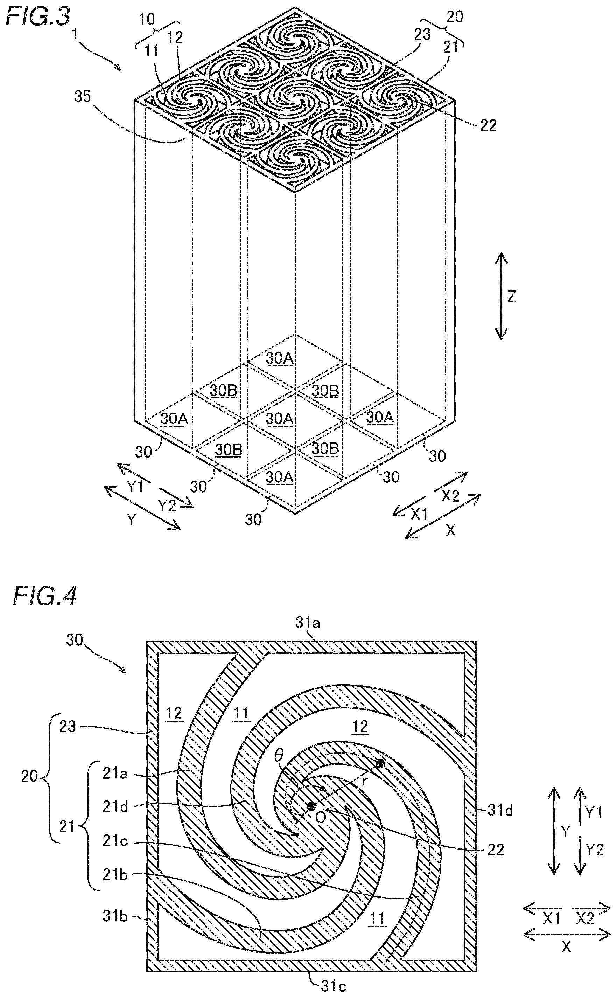

A structure of the core 1 is now specifically described with reference to FIGS. 3 to 8.

FIG. 3 is a schematic perspective view showing the core 1 as an exemplary core of the heat exchanger 100 according to the first embodiment. The core 1 shown in FIG. 3 has a rectangular parallelepiped shape and has openings on its both ends serving as inlets or outlets of the fluids. The core 1 includes a core outer peripheral wall 35 forming an outer surface of the core 1 and a plurality of unit structures 30 arranged inside the core outer peripheral wall 35. The number of the unit structures 30 in the core 1 is not limited to a particular number. In the exemplary core shown in FIG. 3, a total of nine unit structures 30 are formed inside the core outer peripheral wall 35 of the core 1.

The core outer peripheral wall 35 has a rectangular tubular shape. The core outer peripheral wall forms two side surfaces that face each other in a direction (X direction) extending along one side of the core 1, and two side surfaces that face each other in a direction (Y direction) extending along another side of the core.

The unit structures 30 are formed integrally with the core 1. The plurality of unit structures 30 are aligned with each other in the direction (X direction) extending along one side of the core 1 and the direction (Y direction) extending along another side of the core in a matrix shape. Each of the plurality of unit structures 30 extends in a straight-line shape from one end to another end of the core 1 (in a Z direction). The unit structures 30 include a plurality of flow paths 10 and a partition wall 20 separating the plurality of flow paths 10 from each other.

Each flow path 10 is a through hole having one inlet and one outlet. Each flow path 10 passes through the core 1 from the one end to the another end of the core. Each flow path 10 does not branch or merge with another flow path at any midpoint. The flow paths 10 are formed through the partition wall 20. The flow paths 10 include first flow paths 11 in which the first fluid 3 flows and second flow paths 12 in which the second fluid 4 flows. In other words, the first flow paths 11 and the second flow paths 12 are separated by the partition wall 20 and are not connected to each other.

The plurality of flow paths 10 are formed to collectively extend in a predetermined direction. The predetermined direction is a direction that connects the one end to the another end of the core 1. Hereafter, the predetermined direction is referred to as the Z direction, and two directions perpendicular to each other in a plane perpendicular to the Z direction are defined as the X direction and the Y direction. The X direction and the Y direction are defined by sides of the core 1, which has the rectangular parallelepiped shape. One direction is defined as an X1 direction, and another direction is defined as an X2 direction in the X direction. One direction is defined as a Y1 direction, and another direction is defined as a Y2 direction in the Y direction. From this viewpoint, in the following description, a cross section (CS) perpendicular to the predetermined direction is a XY plane (XY cross section).

The partition wall 20 includes division wall parts 21 separating the plurality of flow paths 10 from each other and peripheral wall parts 23. The division wall parts 21 form partitions between the first flow paths 11 and the second flow paths 12 that belong to the unit structure 30. The peripheral wall parts 23 divide the core 1 into the unit structures 30. A set of peripheral wall parts 23 has a rectangular shape. The position and the shape of the set of the peripheral wall parts 23 are fixed in the Z direction. The set of peripheral wall parts 23 surrounds the division wall parts 21.

### <Unit Structure>

FIG. 4 is an enlarged view of one of the unit structures 30 of the exemplary core 1 according to the first embodiment as viewed in the predetermined direction. As shown in FIG. 4, the unit structure 30 has a rectangular shape in the XY cross section including its Z-directional end surface. In an exemplary arrangement shown in FIG. 4, one unit structure 30 includes four division wall parts 21.

### <Cross Sectional Shape of Division Wall Part>

The division wall parts 21 are formed to extend in spiral shapes from a rotation center axis 22 in the cross section CS (XY cross section) perpendicular to the predetermined direction. The division wall parts 21 are spaced away at a constant interval (constant angular interval) from each other about the rotation center axis 22. The rotation center axis 22 is positioned approximately at a center of the unit structure 30 in the XY cross section. Each unit structure 30 has only one rotation center axis 22.

The division wall part 21 extends in a spiral shape geometrically refers that a distance r is a smooth monotonically increasing function of a rotation angle θ where the distance r is defined as a distance from a point ○ to a point of the division wall part 21, the point ○ is defined by a center of the rotation center axis 22 and the rotation angle θ is defined as a rotation angle about the point O on the XY cross section. In other words, where the rotation center axis 22 is a center of the division wall part 21, a shape of the division wall part has a distance between its point and the rotation center axis 22 increasing from its rotation center axis in accordance with its rotation angle about the rotation center axis 22. Here, in FIG. 4, a direction in which the centerline of the division wall part 21 is connected to the rotation center axis 22 is defined as a rotation angle θ = 0. The shape of the division wall part 21 may not strictly agree with a geometric definition of a spiral for convenience of surely providing an interval between the division wall parts 21 adjacent to each other and surely providing an interval between the division wall part 21 and an outer periphery of the unit structure 30. The division wall part 21 may locally include a segment that has no spiral shape. The division wall part 21 may have a shape that is formed by connecting short straight lines to extend along a spiral shape (a spiral shape approximated by a series of straight lines tracing a line of a spiral), for example. The division wall part 21 may be formed in any spiral shape.

Various types of spirals including a logarithmic spirals, Archimedean spirals, and hyperbolic spirals are known as such spiral shapes. For example, a logarithmic spiral is a spiral represented by r = ae^{bθ} (a and b are constants that define its shape, and e is Napier's number), an Archimedean spiral is a spiral represented by r = a + bθ, and a hyperbolic spiral is a spiral represented by r = a/θ.

Also, the division wall part 21 has a spiral segment not smaller than a half turn in the XY cross section. The division wall part 21 preferably has a spiral segment not smaller than a three-quarter turn in the XY cross section. In the exemplary arrangement of FIG. 4, the entire division wall part 21 is a spiral segment, and is formed in a spiral shape not smaller than a three-quarter turn represented by a logarithmic spiral. Here, the number of turns of the spiral segment included in the division wall part 21 is determined based on the shape of the division wall part 21 in which an end of the division wall part 21 is connected to a corner part of the unit structure 30.

The plurality of first flow paths 11 and the plurality of second flow paths 12 are alternately aligned with each other around the rotation center axis 22 by the plurality of division wall parts 21 in one unit structure 30. Accordingly, surfaces of the division wall parts 21 form primary heat transfer surfaces of the first flow paths 11 and the second flow paths 12. Heat is exchanged through the division wall parts 21 between the first fluid 3 and the second fluid 4, which flow in the first and second flow paths 11 and 12, respectively. In FIG. 4, two first flow paths 11 and two second flow paths 12 are alternately aligned with each other around the rotation center axis 22 by four division wall parts 21 in one unit structure 30.

<Z-Directional Shape of Division Wall Part>

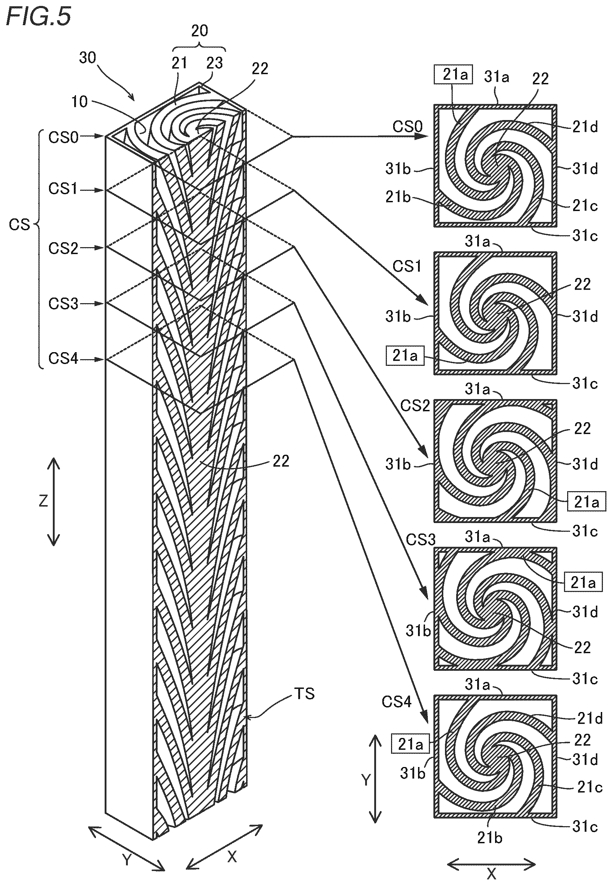

FIG. 5 is a view of the unit structure 30 according to the first embodiment illustrating cross sections CS0 to CS4 of the unit structure at a plurality of positions in the Z direction. Here, the cross section CS0 is the Z-directional end surface of the unit structure 30. In FIG. 5, the four division wall parts 21 in the unit structure 30 are distinguished from each other as division wall parts 21a to 21d.

As shown in FIG. 5, the division wall part 21 has a twisted shape that rotates about the rotation center axis 22 extending in the Z direction in accordance with its position in the Z direction. The division wall part 21 does not have a shape whose XY cross section (spiral shape) shown in FIG. 4 is unchanged in accordance with its extension in the Z direction.

In the cross section CS0, the division wall part 21a extends in a spiral shape from the rotation center axis 22 and is connected to a side 31a of the outer periphery of the unit structure 30. A rotation angle of the division wall part 21 in the cross section CS0 is defined as 0 degree.

In the cross section CS1, which is shifted a predetermined distance in the Z direction from the cross section CS0, the division wall part 21a is positioned at a position that is rotated approximately 90 degrees counterclockwise about the rotation center axis 22 from its position in the cross section CS0. In the cross section CS1, the division wall part 21a extends in a spiral shape from the rotation center axis 22 and is connected to a side 31b of the outer periphery of the unit structure 30.

In the cross section CS2, which is shifted a predetermined distance in the Z direction from the cross section CS1, the division wall part 21a is positioned at a position that is rotated approximately 90 degrees counterclockwise about the rotation center axis 22 from its position in the cross section CS1. In the cross section CS2, the division wall part 21a extends in a spiral shape from the rotation center axis 22 and is connected to a side 31c of the outer periphery of the unit structure 30.

In the cross section CS3, which is shifted a predetermined distance in the Z direction from the cross section CS2, the division wall part 21a is positioned at a position that is rotated approximately 90 degrees counterclockwise about the rotation center axis 22 from its position in the cross section CS2. In the cross section CS3, the division wall part 21a extends in a spiral shape from the rotation center axis 22 and is connected to a side 31d of the outer periphery of the unit structure 30.

In the cross section CS4, which is shifted a predetermined distance in the Z direction from the cross section CS3, the division wall part 21a is positioned at a position that is rotated approximately 90 degrees counterclockwise about the rotation center axis 22 from its position in the cross section CS3. In the cross section CS3, the division wall part 21a extends in a spiral shape from the rotation center axis 22 and is connected to a side 31a of the outer periphery of the unit structure 30. A position of the division wall part 21a in the cross section CS4 agrees with the position of the division wall part 21a in the cross section CS0.

The division wall part 21a is twisted to continuously and smoothly rotates in accordance with its Z-directional position in transitions between the cross sections CS0 to CS4. The other division wall parts 21b to 21d are also twisted to continuously and smoothly rotate in accordance with their Z-directional positions. In other words, the division wall parts 21 have a twisted shape that periodically rotates in accordance with its position in the Z direction while their spiral shape being kept. Hereafter, a distance from the cross section CS0 to the cross section CS4, i.e., a length corresponding to one cycle, is referred to as a pitch P.

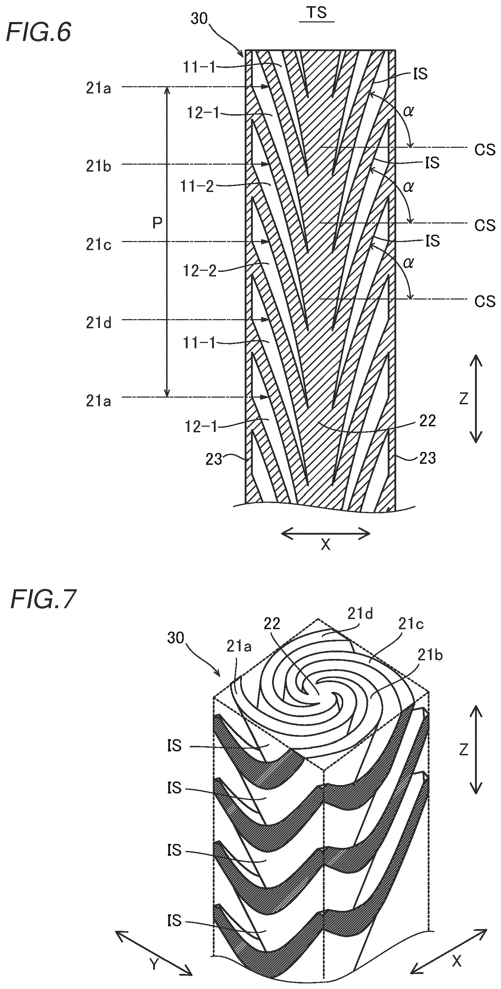

FIG. 6 is a partially enlarged view of a cross section TS of the unit structure 30 according to the first embodiment taken along a line passing through the rotation center axis 22 of the unit structure extending in the Z direction. As seen from FIG. 6, the division wall parts 21 slantly extend from the rotation center axis 22. Gaps between the division wall parts 21 adjacent to each other serve as the flow paths 10 (first flow path 11 or second flow path 12). The flow path 10 at one position appears again at a position spaced at a distance of pitch P in the Z direction away from the one position in the cross section TS.

FIG. 7 is a schematic view showing a three-dimensional shape of the division wall parts 21 in the unit structure 30 according to the first embodiment. As shown in FIG. 7, the division wall parts 21 have a three-dimensional shape that is formed by conically inclined surfaces IS (surfaces of the division wall parts 21) rotating in a helical shape. The surfaces IS appear as V-shaped cross sections in the cross section TS taken along a line passing through the rotation center axis 22 (see FIG. 6). An inclination angle α of the division wall part 21 with respect to the plane perpendicular to the Z direction is not smaller than 45 degrees, for example.

As described above, the division wall part 21 has a twisted shape that rotates about the rotation center axis 22 extending in the Z direction in accordance with its position in the Z direction, and is formed in a spiral shape extending from the rotation center axis 22 in the cross section perpendicular to the Z direction (cross section CS). Accordingly, each flow path 10 (first flow path 11 or second flow path 12) is formed to periodically exchange its X-directional and Y-directional positions in accordance with its Z-directional position between one end to another end of the flow path 10.

Here, an opening shape of the flow path 10 in one end surface of the unit structure 30 is the same as another end surface of the unit structure 30. For example, positions and shapes of the division wall part 21 on the one end surface and the another end surface of the unit structure 30 are the same as each other (e.g., the position and the shape in the cross section CS0). Each of the flow paths 10 has an opening shape having in a spiral shape about the rotation center axis 22 in the end surface of the core 1 reflecting the shape of each of the division wall parts 21.

### <Peripheral Wall Part>

Also, as shown in FIG. 4, in the first embodiment, the partition wall 20 includes the peripheral wall parts 23. The sides 31a to 31d of the outer periphery of the aforementioned unit structure are the peripheral wall parts 23.

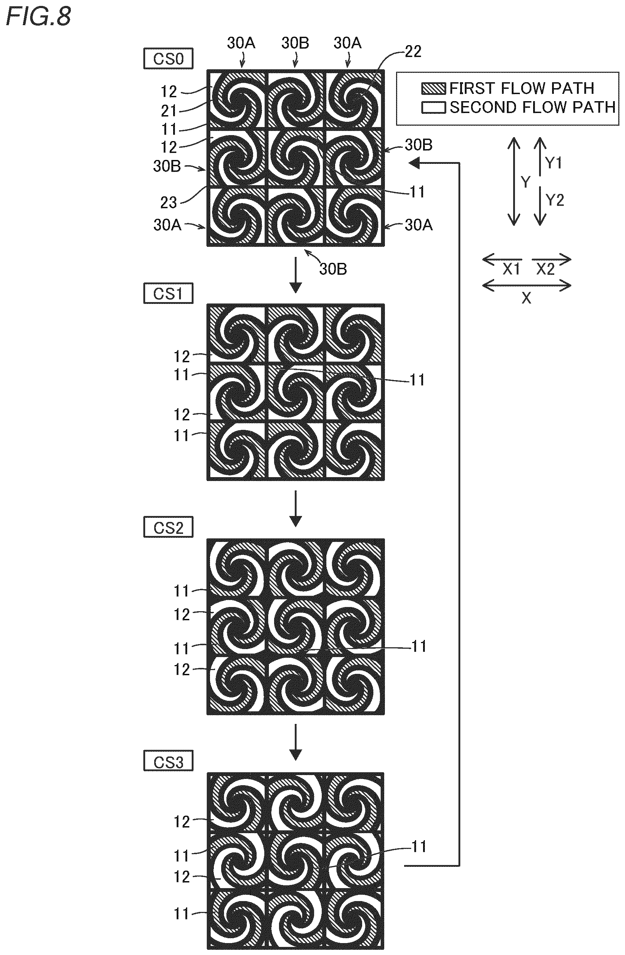

FIG. 8 is a schematic view showing positional relation between flow paths in the cross sections CS0 to CS3 depending on positions in the Z direction of the nine unit structures 30 according to the first embodiment. In FIG. 8, each cross-sectional shape revolves from CS0 to CS3. As shown in FIG. 8, the first flow path 11 in one of the unit structures 30 and the second flow path 12 in another unit structure 30 are adjacent to each other with the peripheral wall part 23 being interposed between the first flow path in one of the unit structures and the second flow path in another unit structure. Here, not all sides of each unit structure 30 are independent peripheral wall parts 23. Two unit structures 30 adjacent to each other share the peripheral wall part 23. Also, the peripheral wall part 23 of the unit structure 30 that is located on the outer periphery of the core 1 forms a part of the core outer peripheral wall 35 of the core 1 (see FIG. 3).

### <Arrangement of Unit Structures>

Here, the unit structures 30 are classified into two types. The nine unit structures 30 have the same basic structure, but directions of their spirals in the cross sections CS and rotation directions of their helices in accordance with their positions in the Z direction are different. Unit structures 30A and unit structures 30B whose rotation directions are different from each other are arranged in a checkerboard pattern (alternately aligned with each other in the X and Y directions) (see FIG. 3).

In other words, in FIG. 8, five unit structures 30 (30A), which are located in the four corner areas and the central area of the core 1, have the division wall parts 21 whose spiral direction is counterclockwise and that have a twisted shape in which their division wall parts 21 rotate counterclockwise in accordance with their positions in the Z direction. Each of the five unit structures 30 (30A) is twisted so that four division wall parts 21 rotate 90 degrees counterclockwise in each of transitions from the cross section CS0 to the cross section CS1, from the cross section CS1 to the cross section CS2, from the cross section CS2 to the cross section CS3, and from the cross section CS3 to the cross section CS0.

On the other hand, in FIG. 8, the other four unit structures 30 (30B) have the division wall parts 21 whose spiral direction is clockwise and that have a twisted shape in which their division wall parts 21 rotate clockwise in accordance with their positions in the Z direction. Each of the other four unit structures 30B is twisted so that four division wall parts 21 rotate 90 degrees clockwise in each of transitions from the cross section CS0 to the cross section CS1, from the cross section CS1 to the cross section CS2, from the cross section CS2 to the cross section CS3, and from the cross section CS3 to the cross section CS0.

Also, the first flow paths 11 and the second flow paths 12 are adjacent to each other with the peripheral wall part 23 being interposed between the unit structure 30A and the unit structure 30B adjacent to each other.

For example, one first flow path 11 in the central unit structure 30A is positioned adjacent to and can exchange heat to/from the second flow path 12 adjacent to the one first flow path in the Y1 direction or the X2 direction in the cross section CS0. Also, one first flow path 11 in the central unit structure 30A is positioned adjacent to and can exchange heat to/from the second flow path 12 adjacent to the one first flow path in the Y1 direction or the X1 direction in the cross section CS1. Also, one first flow path 11 in the central unit structure 30A is positioned adjacent to and can exchange heat to/from the second flow path 12 adjacent to the one first flow path in the Y2 direction or the X1 direction in the cross section CS2. Also, one first flow path 11 in the central unit structure 30A is positioned adjacent to and can exchange heat to/from the second flow path 12 adjacent to the one first flow path in the Y2 direction or the X2 direction in the cross section CS3.

Accordingly, the first flow path 11 in the unit structure 30 is positioned adjacent to the second flow path 12 alternately in other two or more adjacent unit structures 30 in accordance with its positions in the Z direction. Consequently, temperature variation of the fluid in each of the flow paths 10 in the core 1 is small as compared with a case in which the first fluid 3 flowing in one first flow path 11 is adjacent to the second fluid 4 flowing only in one second flow path 12.

According to the aforementioned configuration, the first fluid 3 and the second fluid 4 flow while curling in a helical shape in each of the plurality of unit structures 30 from the one end to the another end (or from the another end to the one end) in the core 1.

### (Internal Configuration of Distributor)

An internal configuration of the distributor 50 is now described. The distributor 50 of the header 2a and the distributor 50 of the header 2b have the same structure. In the following description, the distributor 50 of the header 2a is mainly described.

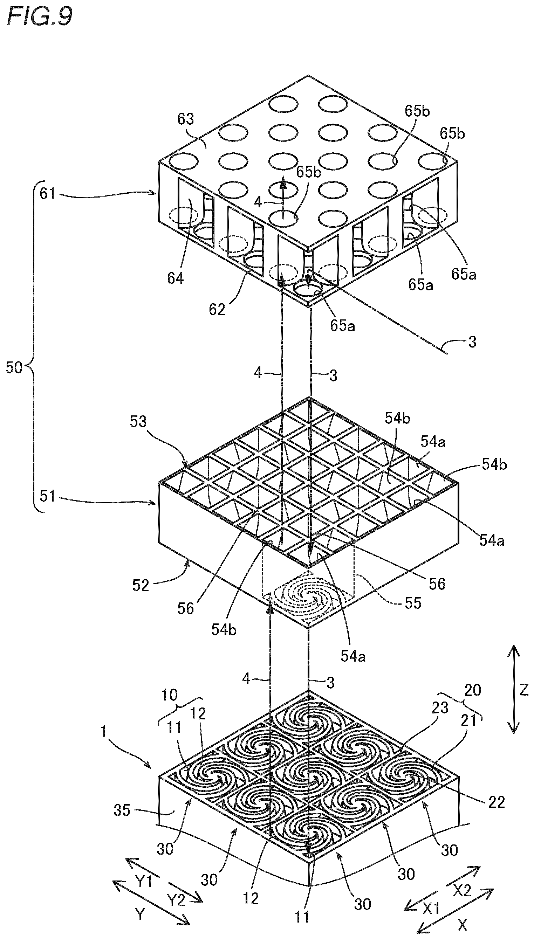

FIG. 9 is an exploded perspective view showing the structure of the distributor 50 according to the first embodiment. As shown in FIG. 9, the distributor 50 includes a conversion part 51 and a branch part 61.

The conversion part 51 serves to convert an opening shape of each flow path to a simple shape. The conversion part 51 is connected to the end surface of the core 1.

The branch part 61 serves to separately direct the first fluid 3 and the second fluid 4 in different directions. The branch part 61 is connected to the conversion part 51.

### <Internal Configuration of Conversion Part>

The conversion part 51 includes a first surface 52, a second surface 53, a plurality of fluid passages 54a and a plurality of fluid passages 54b. The conversion part 51 includes nine unit structures 55 corresponding to the nine unit structures 30 of the core 1. The unit structures 55 are arranged in a matrix shape. One unit structure 55 includes two fluid passages 54a and two fluid passages 54b.

The first surface 52 is a surface connected to the end surface of the core 1.

The second surface 53 is a surface connected to the branch part 61.

The plurality of fluid passages 54a are flow paths that are connected to the first flow paths 11 of the core 1. Each of the fluid passages 54a is connected to corresponding one of the first flow paths 11. The fluid passages 54a are provided to pass through conversion part 51 in the Z direction. The fluid passages 54a are opened on the first surface 52 and the second surface 53.

The plurality of fluid passages 54b are flow paths that are connected to the second flow paths 12 of the core 1. Each of the fluid passages 54b is connected to corresponding one of the second flow paths 12. The fluid passages 54b are provided to pass through conversion part 51 in the Z direction. The fluid passages 54b are opened in the first surface 52 and the second surface 53.

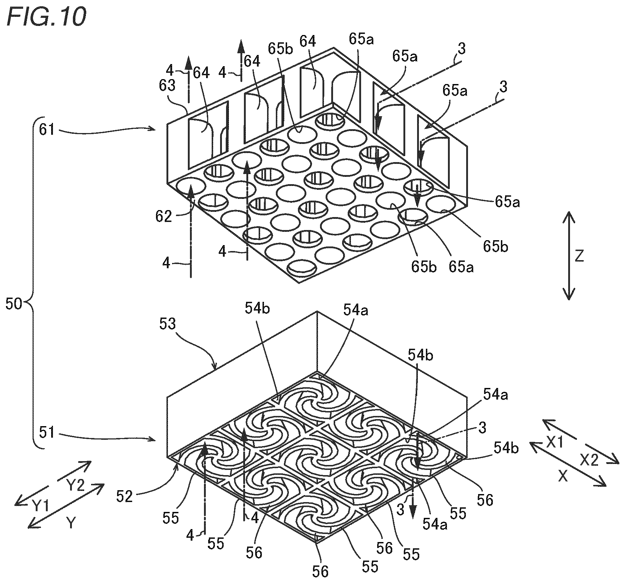

FIG. 10 is another exploded view perspective showing the structure of the distributor according to the first embodiment. As shown in FIG. 10, each of the fluid passages 54a has the same shape as the corresponding one of the first flow paths 11 at the same position as the corresponding one of the first flow paths in the first surface 52. Also, each of the fluid passages 54b has the same shape as the corresponding one of the second flow paths 12 at the same position as the corresponding one of the second flow paths in the first surface 52. Accordingly, the conversion part 51 has openings having spiral shapes in the first surface 52 corresponding to the unit structures 55.

Contrary to this, as shown in FIG. 9, each of the plurality of fluid passages 54a and the plurality of fluid passages 54b have a rectangular opening shape in the second surface 53. In the second surface 53, the fluid passages 54a and the fluid passages 54b are alternately aligned with each other in the X direction and the Y direction to be arranged in a checkerboard pattern. Accordingly, in the second surface 53, each unit structure 55 has four, 2 x 2 rectangular openings (two openings for fluid passages 54a and two openings for fluid passage 54b) .

Two rectangular openings (fluid passages 54a) arranged in a diagonal direction of one unit structure 55 in the second surface 53 of the conversion part 51 are connected in the first surface 52 of the conversion part 51 to two first flow paths 11 included in one unit structure 30 of the core 1. The other two rectangular openings (fluid passages 54b) arranged in a diagonal direction of one unit structure 55 in the second surface 53 of the conversion part 51 are similarly connected in the first surface 52 of the conversion part 51 to two second flow paths 12 included in one unit structure 30 of the core 1.

### <Internal Configuration of Branch Part>

The branch part 61 includes a first baffle part 62, a second baffle part 63, a plurality of tubular parts 64, a fluid passage 65a, and a plurality of fluid passages 65b.

The first baffle part 62 is a plate-shaped part.
The first baffle part 62 is in contact with the conversion part 51. The first baffle part 62 has a plurality of openings. Each of the openings of the first baffle part 62 has a circular shape. The openings of the first baffle part 62 are dimensioned to be enclosed within the rectangular opening in the second surface 53 of the conversion part 51.

The second baffle part 63 is a plate-shaped part. The second baffle part 63 is arranged on a side opposite to the first baffle part 62. The second baffle part 63 has a plurality of openings. The number of openings in the second baffle part 63 is equal to the number of tubular parts 64. The number of openings in the second baffle part 63 is smaller than the number of openings in the first baffle part 62.

The tubular parts 64 are parts having a tubular shape. The tubular parts 64 are hollow. The tubular parts 64 connect the first baffle part 62 to the second baffle part 63. One tubular part 64 is connected to one opening in the first baffle part 62. One tubular part 64 is connected to one opening in the second baffle part 63.

The fluid passage 65a is a flow path that is connected to the plurality of fluid passages 54a of the conversion part 51. The fluid passage 65a is a space enclosed by the first baffle part 62, the second baffle part 63, the plurality of tubular parts 64 and the cover 40. The fluid passage 65a is formed to pass between the first baffle part 62 and the second baffle part 63 in the X direction or the Y direction. The fluid passage 65a is connected to the inlet 41 for the first fluid.

The plurality of fluid passages 65b are flow paths each of which is connected to corresponding one of the plurality of fluid passages 54b in the conversion part 51. Each of the fluid passages 65b is formed to pass from the opening of the first baffle part 62 through an interior of corresponding one of the tubular parts 64 to be connected to the opening of the second baffle part 63. Each of the fluid passages 65b is connected to corresponding one of the fluid passages 54b. The plurality of fluid passages 65b are connected to the outlet 42 for the second fluid.

As shown in FIG. 10, in the branch part 61, the fluid passages 65a and the fluid passages 65b are alternately aligned with each other in the X direction and the Y direction to be arranged in a checkerboard pattern.

Each of the fluid passages 65b is formed to pass through the first baffle part 62 and through the interior of corresponding one of the tubular parts 64 to be opened in the second baffle part 63 as shown in FIG. 9. Also, as shown in FIG. 2, the openings of the second baffle part 63 are connected to the outlet 42 for the second fluid 4 through a merging part 45 of the header 2a. The merging part 45 is an area inside the cover 40 between the second baffle part 63 and the outlet 42 for the second fluid.

### <Flow Route of First Fluid>

The following description describes a route of the first fluid 3, which flows in from the inlet 41 for the first fluid, flows in the first flow path 11 of the core 1 and further flows out through the outlet 43 for the first fluid with reference to FIG. 2.

The first fluid 3 flows in from the inlet 41 for the first fluid, and further flows into the fluid passage 65a (the space between the first baffle part 62 and the second baffle part 63). The first fluid 3 that flows into the fluid passage 65a passes through openings of the fluid passages 65a provided in the first baffle part 62 and flows into the fluid passages 54a (not shown) of the conversion part 51. The first fluid 3 that passes through the fluid passages 54a of the conversion part 51 flows into the first flow paths 11 (not shown) of the core 1.

The first fluid 3 that flows out of each of the first flow paths 11 of the core 1 flows into corresponding one of the fluid passages 54a of the conversion part 51. The first fluid 3 that passes through each of the fluid passages 54a of the conversion part 51 flows through the openings of corresponding one of the fluid passages 65a provided in the first baffle part 62 and flows out to the merging part 45. The first fluid 3 that flows out to the merging part 45 passes from the merging part 45 through the outlet 43 for the first fluid, and flows out through the outlet 43 for the first fluid.

### <Flow Route of Second Fluid>

The following description describes a route of the second fluid 4, which flows in from the inlet 44 for the second fluid, flows in the second flow path 12 of the core 1 and further flows out through the outlet 42 for the second fluid with reference to FIG. 2.

The second fluid 4 flows in from the inlet 44 for the second fluid, and further flows into the fluid passage 65b (the space between the first baffle part 62 and the second baffle part 63). The second fluid 4 that flows into the fluid passage 65b passes through openings of the fluid passages 65b provided in the second baffle part 63 and flows into the fluid passages 54b (not shown) of the conversion part 51. The second fluid 4 that passes through each fluid passage 54b of the conversion part 51 flows into each of the second flow paths 12 (not shown) of the core 1.

The second fluid 4 that flows out of each of the second flow paths 12 of the core 1 flows into corresponding one of the fluid passages 54b of the conversion part 51. The second fluid 4 that passes through each of the fluid passages 54b of the conversion part 51 flows through the openings of corresponding one of the fluid passages 65b provided in the second baffle part 63 and flows out to the merging part 45. The second fluid 4 that flows out to the merging part 45 passes from the merging part 45 through the outlet 42 for the second fluid, and flows to the outside of the heat exchanger 100.

The heat exchanger 100 according to the first embodiment is configured as described above.

The core 1, and the headers 2a and 2b of the heat exchanger 100 can be formed as a three-dimensional structure by using additive manufacturing. The heat exchanger 100 can be configured by integrally forming each of the core 1, and the headers 2a and 2b (as a single component) separately by using additive manufacturing and then by bonding the core and the headers to each other. Alternatively, the entire heat exchanger 100 including the core 1, and the headers 2a and 2b can be integrally formed by using additive manufacturing.

Specifically, the additive manufacturing is powder additive manufacturing. The powder additive manufacturing is a technique for fabricating a three-dimensional structure by repeatedly forming a part to be fabricated by irradiating a powder material with a laser or an electron beam to melt and solidify it in a stacking direction (fabricating direction). The powder material is, for example, a metal material such as an iron-based, copper-based, titanium-based or aluminum-based material. In particular, aluminum (or an aluminum alloy) is preferable from the viewpoint of weight, mechanical strength, heat transfer performance, and the like.

### (Advantages of First Embodiment)

In the first embodiment, the following advantages are obtained.

### (First Advantage of First Embodiment)

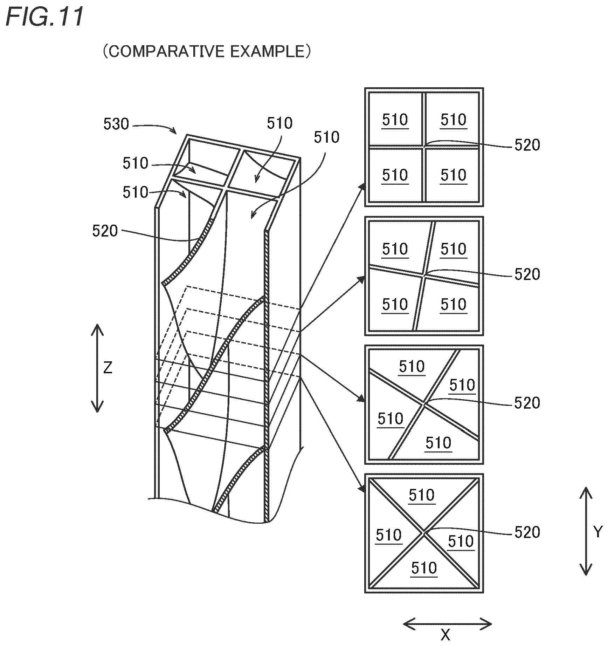

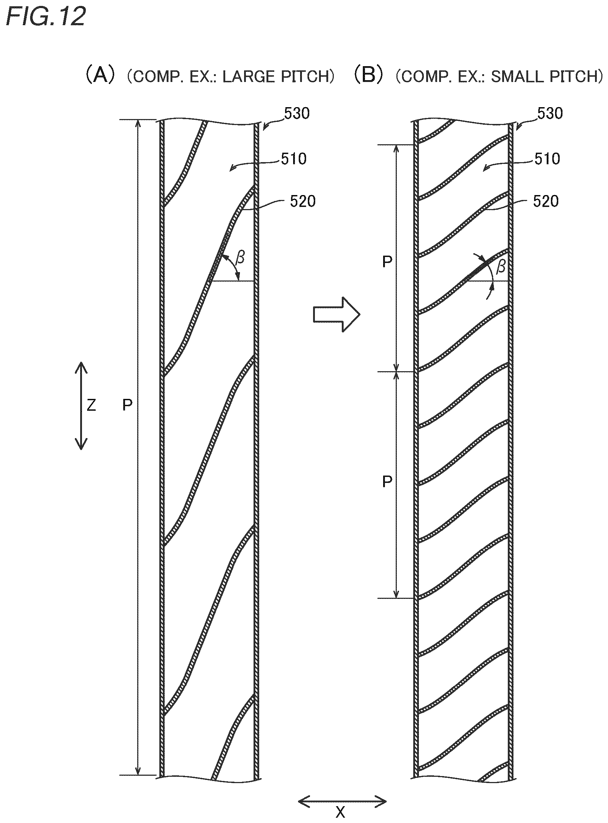

The inventor's findings are first described. FIG. 11 is a schematic view showing a structure of a unit structure 530 of a core of a comparative example. As shown in FIG. 11, a partition wall 520 having a cross shape in XY cross section is formed in a helical shape in the unit structure 530 of the comparative example. FIG. 12(A) is a cross-sectional view of the core of the comparative example having a large pitch taken along a line extending in the Z direction, and FIG. 12(B) is a cross-sectional view of the core of the comparative example having a small pitch taken along the line extending in the Z direction. As shown in FIG. 12, in the cross sections of the unit structure 530 of the comparative example taken along the line extending in the Z-direction, the partition wall 520 appears as inclined surfaces slantly extending from one side surface to another side surface of the unit structure 530. Since a route length of the flow path 510 in the unit structure 530 that has a structure whose pitch P is smaller is longer so that a surface area of its partition wall 520, which is a primary heat transfer surface, is larger, the structure whose pitch P is smaller can can improve heat exchange efficiency. In other words, the heat exchange efficiency can be improved by reducing the pitch P in the Z direction in the flow paths of the helical structure. On the other hand, since an inclination angle β of the partition wall 520 is reduced by reducing the pitch P, reduction of the pitch brings the inclination angle closer to a fabricable inclination angle lower limit (approximately 45 degrees).

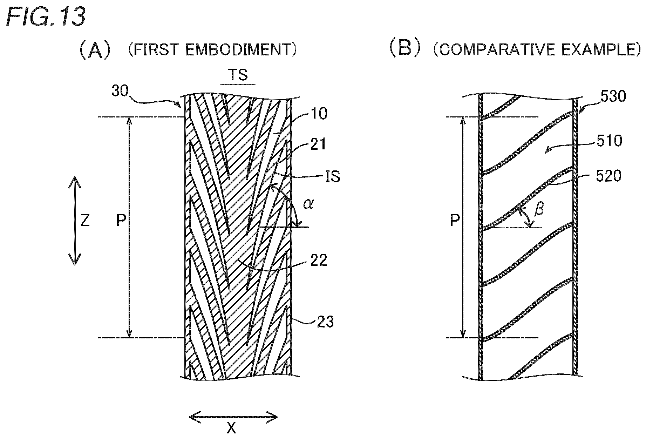

A first advantage of this embodiment is now described. In FIG. 13, FIG. 13(A) is a cross-sectional view of the unit structure 30 according to the first embodiment taken along a line extending in the Z direction, and FIG. 13(B) is a cross-sectional view of the unit structure 530 of the comparative example taken along the line extending in the Z direction. In the case in which the unit structures having the same pitch P are compared with each other, an inclination angle α of the division wall part 21 according to the first embodiment is larger than the inclination angle β of the comparative example. In other words, the pitch P in the first embodiment can be smaller than the comparative example, and a heat transfer area in the first embodiment can be larger than the comparative example. Consequently, according to the first embodiment, it is possible to provide a heat exchanger capable of being produced by additive manufacturing and further improving heat exchange efficiency.

### (Second Advantage of First Embodiment)

Here, the inclination angle α of the division wall part 21 is increased by increasing a curvature of the division wall part 21 having a spiral shape in the cross section CS perpendicular to the Z direction. In other words, since the curvature of the division wall part 21 is increased by increasing the number of turns of the spiral segment in the unit structure 30, the inclination angle α is increased by increasing the number of turns of the spiral segment. For example, the pitch P can be effectively reduced by the division wall part 21 having the spiral segment not smaller than a half turn. Furthermore, the pitch P can be more effectively reduced by the division wall part 21 having the spiral segment not smaller than a three-quarter turn.

### (Third Advantage of First Embodiment)

In the first embodiment, the unit structures 30 are planarly (two-dimensionally) arranged with no gaps. Also, the number of parameters (coordinate axes) for arrangement of the plurality of unit structures 30 can be reduced as compared with a configuration in which a plurality of unit structures 30 are three-dimensionally arranged. Consequently, according to the first embodiment, it is possible to integrate a flow path structure of the core 1.

### (Fourth Advantage of First Embodiment)

Also, in the first embodiment, heat can be exchanged between the first flow paths 11 and the second flow paths 12 in one unit structure 30 by the division wall part 21. In addition, heat can be exchanged between the first flow path 11 in one of two unit structures 30 adjacent to each other and the second flow path 12 in another of the two unit structures by the peripheral wall part 23.

### [Second Embodiment]

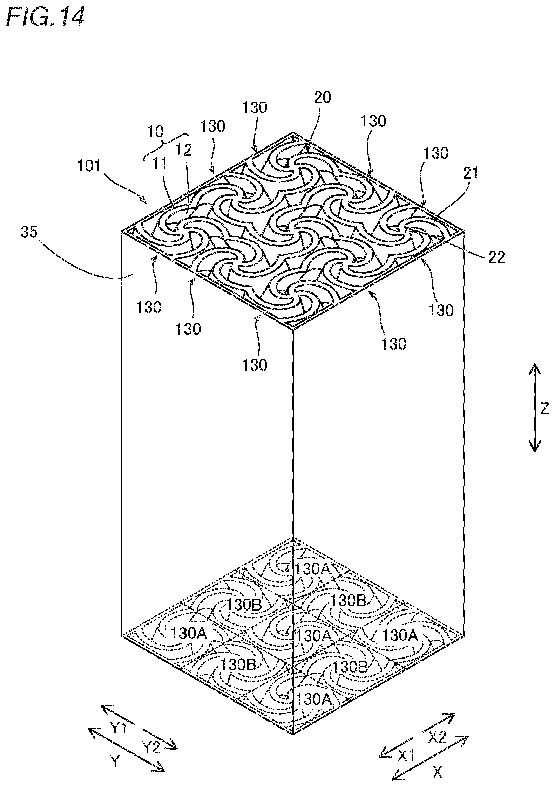

A heat exchanger according to a second embodiment is now described with reference to FIGS. 14 to 17. The heat exchanger according to the second embodiment is an exemplary heat exchanger in which the individual unit structure 30 includes no peripheral wall part 23. The structures of the second embodiment are the same as those of the first embodiment except for a core 101, the structures of the second embodiment other than the core 101 are denoted by the same reference numerals as those of the first embodiment, and their description is omitted.

FIG. 14 is a schematic perspective view showing a structure of a core 101 according to the second embodiment. As shown in FIG. 14, the core 101 according to the second embodiment includes a plurality (nine) of unit structures 130 and a core outer peripheral wall 35 that forms an outer periphery of the core 101. The core 101 according to the second embodiment includes a total of nine unit structures 130, which are aligned in a 3 x 3 matrix in the X direction and the Y direction similar to the first embodiment. On the other hand, the nine unit structures 130 of the core 101 according to the second embodiment have no peripheral wall part 23. The nine unit structures 130 are entirely enclosed by a core outer peripheral wall 35, while unit structures 130 are not individually enclosed by walls but each of the unit structures is connected to another adjacent unit structure 130.

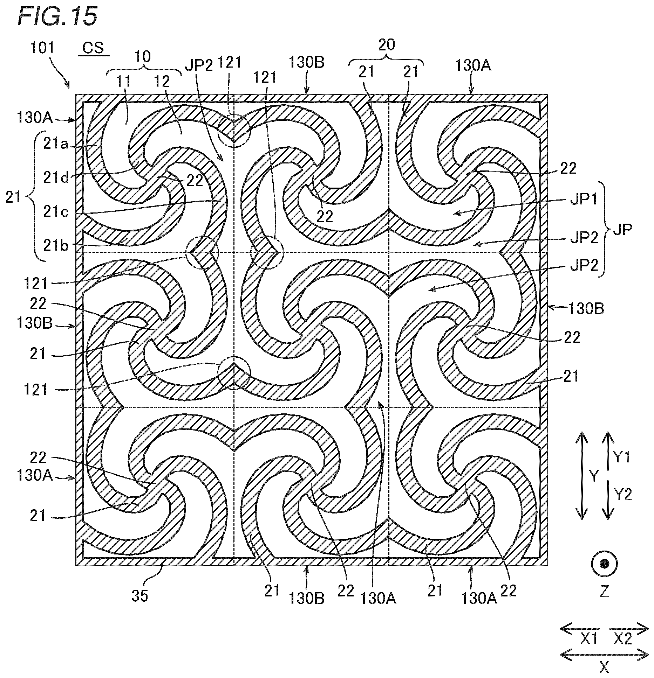

FIG. 15 is an enlarged view showing a structure of a Z-directional end surface of the core 101 according to the second embodiment. As shown in FIG. 15, one of the division wall parts 21 in one of the nine unit structures 130 is formed to be connected to another of the division wall parts 21 in another of the unit structure 130 adjacent the one of the plurality of unit structures in the cross section CS perpendicular to the Z direction (connection part 121). The merging parts JP (JP1, JP2) are formed by merging the flow paths 10 of the unit structures 130 adjacent to each other with each other. In other words, each of the merging parts JP straddles two or more of the unit structures 130 that are adjacent to each other.

Each of the merging parts JP1 is a part in which two flow paths 10 belonging to separate unit structures 130 merge with each other. In other words, each of the merging parts JP1 straddles two unit structures 130 adjacent to each other. One merging part JP1 is enclosed by two division wall parts 21 of one of the unit structures 130, two division wall parts 21 of another of the unit structures 130, and the core outer peripheral wall 35.

Each of the merging parts JP2 is a part in which four flow paths 10 belonging to separate unit structures 130 merge with each other. In other words, each of the merging parts JP2 straddles four unit structures 130 adjacent to each other. The merging part JP2 is enclosed by two division wall parts 21 of each of the four unit structures 130 (totally by eight division wall parts 21).

Here, also in the second embodiment, the unit structures 130A and 130B are alternately aligned with each other in the X direction and the Y direction in a checkerboard pattern. Five of the unit structures 130 (130A) includes the division wall parts 21 whose spiral direction is counterclockwise. The other four unit structures 130 (130B) have the division wall parts 21 whose spiral direction is clockwise.

One of the division wall parts 21 in one of the plurality of unit structures 130 is formed to be alternately connected to other of the division wall parts 21 in other two or more different unit structures of the unit structures 130 that are adjacent to the one of the plurality of unit structures from one end to another end in the Z direction. Also, the flow path 10 of one of the plurality of unit structures 130 merges with the flow paths 10 of two or more other unit structures 30 to form the merging part JP and separates from them from one end to another end in the Z direction. Note that in the plurality of flow paths 10, the first flow path 11 merges with and separates from only other first flow paths 11, and the second flow path 12 merges with and separates from only other second flow path 12. The first flow path 11 and the second flow path 12 never merge with each other.

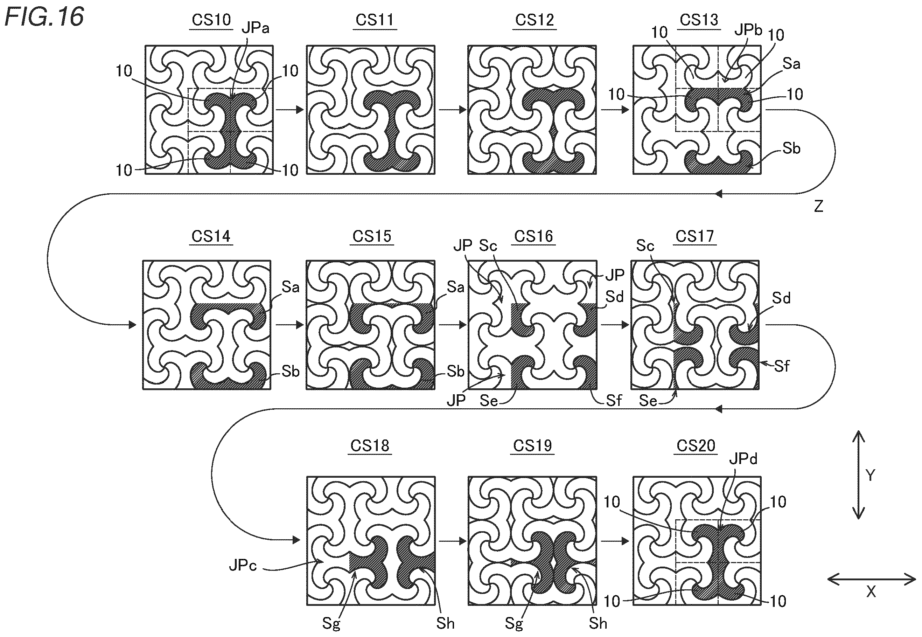

FIG. 16 is a view schematically showing cross sections CS10 to CS20 of the core 101 according to the second embodiment at Z-directional positions. Here, four flow paths 10 represented by a hatching pattern are focused.

In the cross section CS10, four flow paths 10 merge with each other to form a merging part JP (JPa) represented by the hatching pattern. The merging part JP (JPa) extends in the Y direction.

After passing through the cross sections CS11 and CS12, the merging part JP represented by the hatching pattern separates into parts Sa and Sb in the Y direction in the cross section CS13. Each of the parts Sa and Sb is formed by two flow paths 10. In the cross section CS13, the part Sa merges with two flow paths 10 adjacent to the part Sa to form a merging part JP (JPb) that straddles four unit structures 130. The merging part JP (JPb) extends in the X direction.

After passing through the cross sections CS14 and CS15, the part Sa separates into parts Sc and Sd in the X direction when reaching the cross section CS16. The part Sb similarly separates into parts Se and Sf in the X direction. The parts Sc, Sd, and Se form different merging parts JP. The part Sf is a single flow path 10.

The two parts Sc and Se become closer to each other in the Y direction in the cross section CS17, and then merge with each other to form a part Sg when reaching the cross section CS18. The part Sg merges with two flow paths 10 adjacent to the part Sg to form a merging part JP (JPc) formed by four flow paths 10. The merging part JP (JPc) extends in the X direction. The parts Sd and Sf similarly merge with each other to form a part Sh.

The parts Sg and Sh become closer to each other in the X direction in the cross section CS19, and then merge with each other to form a merging part JP (JPd), which has a shape similar to the merging part JP (JPa) shown in the cross section CS10, when reaching the cross section CS20. Here, the shape of the cross section CS20 is the same shape as the cross section CS10. This means that an interval between the cross section CS10 and the cross section CS20 in the Z direction is an integral multiple of the pitch P.

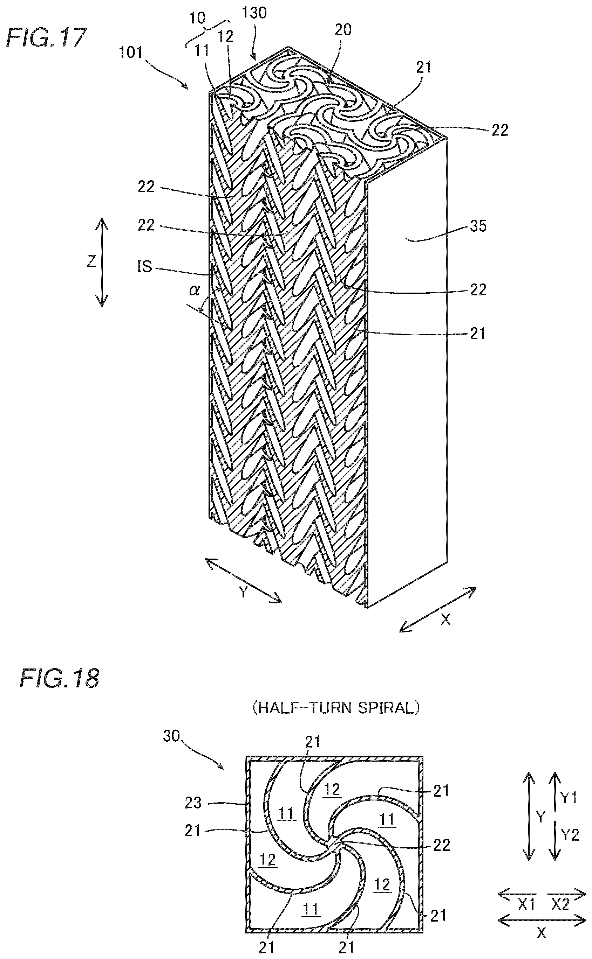

FIG. 17 is a perspective view showing a cross section TS of the core 101 according to the second embodiment taken along a line extending in the Z direction. Also, the shape of the division wall parts 21 in the unit structure 130 according to the second embodiment is similar to the aforementioned first embodiment except for the difference that no the peripheral wall part 23 is provided. In other words, the division wall part 21 has a twisted shape that rotates about the rotation center axis 22 extending in the Z direction in accordance with its position in the Z direction. The division wall parts 21 are formed to extend in spiral shapes from the rotation center axis 22 in the cross section CS perpendicular to the Z direction. For this reason, an inclination angle α of the division wall part 21 in the cross section TS taken along a line extending in the Z direction is larger than the comparative example (see FIG. 13) similar to the aforementioned first embodiment.

### (Advantages of Second Embodiment)

In the second embodiment, the following advantages are obtained.

### (First Advantage of Second Embodiment)

According to the second embodiment, the inclination angle α of the division wall part 21 can be increased similar to the aforementioned first embodiment. In other words, the pitch P in the second embodiment can be smaller than the comparative example, and a heat transfer area in the second embodiment can be larger than the comparative example. Consequently, according to the second embodiment, it is possible to provide a heat exchanger capable of being produced by additive manufacturing and further improving heat exchange efficiency.

### (Second Advantage of Second Embodiment)

Also, according to the second embodiment, even if a difference is included in temperature distribution in each of the flow paths 10 in the unit structure 30, the temperature difference can be effectively reduced by mixing fluid flows in the flow paths 10 (mixing one of fluid flows of the first fluid 3 with other fluid flows of the first fluid, or mixing one of fluid flows of the second fluid 4 with other fluid flows of the second fluid).

The other advantages of the second embodiment are similar to the first embodiment.

### [Modified Embodiments]

### (First Modified Embodiment)

One unit structure 30 may be arranged in the core 1 with the division wall part 21 having a spiral shape extending from the rotation center axis 22 of the one unit structure 30 to the core outer peripheral wall 35 instead of nine, 3 x 3 unit structures 30 arranged in the core 1.

### (Second Modified Embodiment)

Also, a larger number of division wall parts 21 may be arranged in the rotation direction to form a larger number of flow paths 10 in one unit structure 30. In other words, the number of flow paths 10 included in one unit structure 30 may be smaller than four or not smaller than five. Also, the number of division wall parts 21 in one unit structure 30 may be smaller than four or not smaller than five. Here, in the arrangement in which the first flow paths 11 and the second flow paths 12 are arranged in the rotation direction about the rotation center axis 22, it is preferable that the number of first flow paths 11 and the number of the second flow paths 12 arranged in one unit structure 30 are the same so that the first flow paths 11 and the second flow paths 12 can be arranged adjacent to each other in the rotational direction.

### (Third Modified Embodiment)

FIG. 18 is a cross-sectional view showing a core according to a third modified embodiment taken along a line extending perpendicular to the Z direction. In the first modified embodiment, three first flow paths 11 and three second flow paths 12 are formed by six division wall parts 21. Also, in the first modified embodiment, each division wall part 21 is formed in a spiral shape of a half turn.

### (Fourth Modified Embodiment)

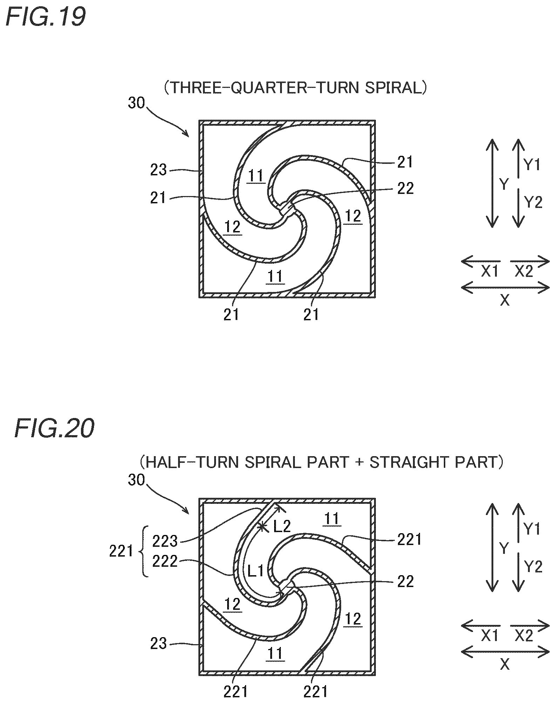

FIG. 19 is a cross-sectional view showing a core according to a fourth modified embodiment taken along a line extending perpendicular to the Z direction. In the second modified embodiment, each division wall part 21 is formed in a spiral shape of a three-quarter turn.

### (Fifth Modified Embodiment)

FIG. 20 is a cross-sectional view showing a core according to a fifth modified embodiment taken along a line extending perpendicular to the Z direction. In the third modified embodiment, each division wall part 221 includes a spiral segment 222 and a non-spiral segment 223. The non-spiral segment 223 is a straight part. A route length L1 of the spiral segment 222 is greater than a route length L2 of the non-spiral segment 223. The route length L1 of the spiral segment 222 is, for example, greater than a half the entire route length (L1 + L2) of the division wall part 221.

### (Sixth Modified Embodiment)

In addition, the partition wall may have a mix of division wall parts having spiral shapes of different numbers of turns. For example, spiral division wall parts of a half turn and spiral division wall parts of a three-quarter turn may extend from one rotation center axis. In a case in which such division wall parts having spiral shapes of different numbers of turns are mixed, since a difference between the numbers of turns or sizes in the Z direction may cause interference between the division wall parts, the spiral shape of the division wall parts can be arbitrarily designed within a degree that prevents the interference between the division wall parts. Here, in the case in which such division wall parts having spiral shapes of different numbers of turns are mixed in the partition wall, a value of the smallest turn in the number of turns of the spiral of those division wall parts is used to determine whether the partition wall can be produced by additive manufacturing. The reason is that the smaller the number of turns of the spiral, the closer the angle between the spiral and a horizontal plane during the production, which means shape failures are likely to occur.

### (Seventh Modified Embodiment)

Also, the plurality of flow paths 10 may have different cross-sectional sizes. For example, in a case in which flow rates of the first fluid 3 and the second fluid 4 are different, the flow paths 10 may be formed to set a cross-sectional area of one of the first flow path 11 and the second flow path 12 larger and a cross-sectional area of another of the the first flow path and the second flow path smaller in the flow paths 10 depending on a ratio between the flow rate, and the like. In other words, intervals between the plurality of division wall parts 21 in the rotation direction may not be fixed.

### (Eighth Modified Embodiment)

Also, an arrangement of a plurality of types of unit structure 30 other than a matrix shape may be used.

### (Ninth Modified Embodiment)

Also, the cross-sectional shape of the unit structure 30 may be a circular shape, or a polygonal shape having smaller four or not smaller than five vertices, such as a triangular shape, a hexagonal shape or a octagonal shape, for example.

### (Tenth Modified Embodiment)

Also, the shape of the core 1 may be a shape, such as a cylindrical shape as a whole, other than the rectangular parallelepiped shape.

### (Eleventh Modified Embodiment)

Also, the division wall parts 21 of the plurality of unit structures 30 may have the same spiral direction, or the same helical rotation direction.

### (Twelfth Modified Embodiment)

Also, the plurality of flow paths 10 may further include, in addition to the first flow paths 11 and the second flow paths 12, third flow paths in which a third fluid flows. The plurality of flow paths 10 may be configured to allow any number of fluids to flow, and may include a certain number of flow paths (types of flow paths) depending on the types of fluids.

### Description of Reference Numerals

1, 101; core
3; first fluid
4; second fluid
10; flow path
11, 11-1, 11-2; first flow path
12, 12-1, 12-2; second flow path
20; partition wall
21, 21a, 21b, 21c, 21d, 221; division wall part
22; rotation center axis
23; peripheral wall part
30, 30A, 30B, 130, 130A, 130B; unit structure
35; core outer peripheral wall
45; merging part
100; heat exchanger
222; spiral segment
CS (CS0 to CS4, CS10 to CS20); XY cross section (cross section perpendicular to predetermined direction)
JP, JP1, JP2; merging part
P; pitch
TS; longitudinal cross section (longitudinal cross section taken along line extending in predetermined direction)
α; inclination angle
Z direction (predetermined direction)

## Claims

1. A heat exchanger comprising
a core capable exchanging heat between a plurality of fluids, wherein
the core includes
a core outer peripheral wall forming an outer surface, and
one unit structure or a plurality of unit structures arranged inside the outer peripheral wall;
the unit structure includes
a plurality of flow paths formed to extend in a predetermined direction as a whole, and
a partition wall separating the plurality of flow paths from each other;
the plurality of flow paths include
a first flow path(s) in which a first fluid flows, and
a second flow path(s) in which a second fluid flows to exchange heat to/from the first fluid through the partition wall;
the partition wall includes a division wall part(s); and
the division wall part(s) has/have a twisted shape that rotates about a rotation center axis extending in the predetermined direction in accordance with a position in the predetermined direction, and is/are formed to extend in a spiral shape from the rotation center axis in a cross section perpendicular to the predetermined direction.

2. The heat exchanger according to claim 1, wherein the division wall part(s) has/have a spiral segment not smaller than a half turn in the cross section perpendicular to the predetermined direction.

3. The heat exchanger according to claim 2, wherein the division wall part(s) has/have a spiral segment not smaller than a three-quarter turn in the cross section perpendicular to the predetermined direction.

4. The heat exchanger according to any of claims 1 to 3, wherein the division wall part(s) includes/include a segment that extends in a straight-line shape in the cross section perpendicular to the predetermined direction.

5. The heat exchanger according to any of claims 1 to 3, wherein
the division wall part(s) is/are the division wall parts;
the first flow path(s) and the second flow path(s) extend from the one rotation center axis, which is common to the first flow path(s) and the second flow path(s), to be aligned with each other around the rotation center axis; and
the one unit structure or the plurality of unit structures are the plurality of unit structures, and are aligned with each other in a direction(s) perpendicular to the predetermined direction.

6. The heat exchanger according to claim 5, wherein
the unit structures are divided by the plurality of division wall parts;
the plurality of division wall parts are formed to be spaced away from each other a rotation direction about the rotation center axis; and
the first flow paths and the second flow paths are alternately aligned with each other around the rotation center axis.

7. The heat exchanger according to claim 5, wherein
the partition wall includes peripheral wall parts dividing the core into the unit structures; and
the first flow path in one of the unit structures and the second flow path in another of the unit structures are adjacent to each other with the peripheral wall part being interposed between the first flow path in the one of the unit structures and the second flow path in the another of the unit structures.

8. The heat exchanger according to claim 5, wherein
one of the division wall parts in one of the plurality of unit structures is formed to be connected to another of the division wall parts in another of the unit structures that is adjacent to the one of the plurality of unit structures in the cross section perpendicular to the predetermined direction; and
the flow paths in the unit structures that are adjacent to each other merge with each other.

9. The heat exchanger according to claim 8, wherein
one of the division wall parts in one of the plurality of unit structures is formed to be alternately connected to other of the division wall parts in other two or more different unit structures from one end to another end in the predetermined direction; and
one of the flow paths in the one of the unit structures merges with or separates from the flow paths in the two or more different unit structures.
